# EUROPÄISCHE PATENTANMELDUNG

(11) **EP 1 043 265 A2**
(43) Veröffentlichungstag der Anmeldung: **11.10.2000**
(21) Anmeldenummer: 00250107.0
(22) Anmeldetag: 31.03.2000
(51) Int. Cl.: B66D 5/02, B66D 3/22

(54) **Bremse, insbesondere für einen mit einem Universalmotor und einem selbsthemmenden Schneckengetriebe versehenen Antrieb eines Hebezeugs**

(30) Priorität: 01.04.1999 DE 19916413
(71) Anmelder: MANNESMANN Aktiengesellschaft, 40213 Düsseldorf (DE)
(72) Erfinder: Gersemsky, Udo, 58313 Herdecke (DE); Flaig, Heinz, 44801 Bochum (DE); Heun, Jürgen, 44379 Dortmund (DE); Schulte, Franz, 58313 Herdecke (DE); Ostholt, Rüdiger, 58300 Wetter (DE)
(74) Vertreter: Meissner, Peter E., Dipl.-Ing.

(57) **Zusammenfassung**

Die Erfindung betrifft eine Bremse für ein Hebezeug, mit einer Bremsscheibe und einem quer zur Bremsscheibe ausgerichteten Magnetfeld, das eine die Bewegung der Bremsscheibe hemmende Reaktionskraft erzeugt, wobei das Magnetfeld mittels zweier beidseitig der Bremsscheibe angeordneter Magnetpole gebildet ist. Um eine preiswerte, kompaktbauende und verschleißfreie drehrichtungsabhängige Bremse zu schaffen, die insbesondere für einen Antrieb eines Hebezeugs verwendbar ist, der einen Motor ohne generatorisches Moment und/oder mit einer stark lastabhängigen Drehzahl sowie ein selbsthemmendes Getriebe aufweist, wird vorgeschlagen, dass die beiden Magnetpole von der Reaktionskraft aus einer Ruhelage entlang eines von einer Zwangsführung vorgegebenen Weges gegen die Rückstellkraft eines elastischen Elements jeweils in Drehrichtung der Bremsscheibe bewegbar sind, wobei der radiale Abstand im Verlauf des Weges durch den gewünschten Verlauf der drehrichtungs- und drehzahlabhängigen Bremskraft vorgegeben und mittels der Rückstellkraft des elastischen Elements einstellbar ist.

## Beschreibung

Bremse, insbesondere für einen mit einem Universalmotor und einem selbsthemmenden Schneckengetriebe versehenen Antrieb eines Hebezeugs, gemäß dem Oberbegriff des Anspruchs 1 und Hebezeug mit einer Bremse gemäß dem Oberbegriff des Anspruchs 9.

Es ist allgemein bekannt, insbesondere bei den gebräuchlichen Elektrizitätszählern, zur geschwindigkeitsabhängigen Bremsung ein entsprechendes Gegendrehmoment mittels einer elektrisch leitenden Bremsscheibe und einem auf einen Teil der Bremsscheibe einwirkenden quer zur Bremsscheibe verlaufenden Magnetfeld zu erzeugen. Hierzu läuft die flache Bremsscheibe durch den Luftspalt eines hufeisenförmigen Dauermagneten. Dies führt zu einer Induzierung eines Stroms in der Bremsscheibe, der in etwa proportional zur Drehgeschwindigkeit ist und sich über den nicht im Magnetfeld befindlichen Teil der Scheibe schließt, wobei der Stromfluss ein Gegenmagnetfeld und mittels der daraus resultierenden magnetischen Kräfte das Gegendrehmoment erzeugt, was eine Bremsung der Scheibe bewirkt. Das Gegendrehmoment ist dabei von dem mittleren radialen Abstand des Magnetfeldes von der Drehachse abhängig, da sich der vom Magnetfeld durchdrungene Teil der Bremsscheibe bei konstanter Drehzahl mit größer werdendem Radius mit zunehmender Geschwindigkeit durch das Magnetfeld hindurch bewegt.

Weiter ist es bekannt, Hebezeugantriebe zum Heben und Senken von Lasten mit einem Kurzschlussläufermotor als motorisch und generatorisch betreibbarem Elektromotor (sog. Vier-Quadranten-Motor) und zusätzlich mit einer mechanischen Bremse zu versehen, insbesondere zur Verzögerung und zum Lasthalten.

Kurzschlussläufermotore zeichnen sich dadurch aus, dass deren Drehzahl relativ unabhängig von der Drehrichtung und der Last ist und beim Senken der Last, d.h. bei von der Last angetriebenem Motor, selbsttätig ein erwünschtes Bremsmoment erzeugen. Als mechanische Bremsen werden üblicherweise Elektromagnetbremsen oder Lastdruckbremsen verwendet.

Die Aufgabe der Erfindung ist es, eine preiswerte, kompaktbauende, und verschleißfreie drehrichtungsabhängige Bremse zu schaffen, die insbesondere für einen Antrieb eines Hebezeugs verwendbar ist, der einen Motor ohne generatorisches Moment und/oder mit einer stark lastabhängigen Drehzahl sowie ein selbsthemmendes Getriebe aufweist. Ein derartiger Elektromotor ist insbesondere der preisgünstige Universalmotor. Weiter ist es die Aufgabe der Erfindung, ein preisgünstiges kleinbauendes Hebezeug mit einer konstruktiv einfachen Bremse anzugeben.

Die Aufgabe wird durch die im Anspruch 1 angegebenen Merkmale gelöst. Die Merkmale der Unteransprüche beschreiben vorteilhafte Ausgestaltungen.

Die Lösung sieht bezüglich der als Wirbelstrombremse ausgebildeten Bremse vor, dass die beiden Magnetpole von dem Gegenmagnetfeld aus einer Ruhelage entlang eines von einer Zwangsführung vorgegebenen Weges gegen die Rückstellkraft eines elastischen Elements jeweils in Drehrichtung der Bremsscheibe bewegbar sind, wobei der radiale Abstand im Verlauf des Weges durch den gewünschten Verlauf der drehrichtungs- und drehzahlabhängigen Bremskraft vorgegeben und mittels der Rückstellkraft des elastischen Elements einstellbar ist. Die vorgeschlagene Wirbelstrombremse ist besonders für einen Drehantrieb mittels Gleich- oder Wechselstrommotor ohne generatorisches Moment und stark lastabhängiger Drehzahl, also Universalmotore, geeignet. Diese preisgünstigen Universalmotore haben allerdings insbesondere bei Verwendung in Hebezeugen den Nachteil, dass sie wegen des fehlenden generatorischen Moments nicht in der üblichen einfachen Art und Weise zu bremsen sind. Darüber hinaus sind Universalmotoren stark last- und drehzahlabhängig; im lastfreien Betrieb neigen sie leicht zum "Durchdrehen", d.h. die Drehzahl steigt sehr stark an, weshalb sie ständig mit einer Last betrieben werden müssen. Weiter sollte die Bremswirkung bei Verwendung in Hebezeugen drehrichtungsabhängig sein, da nur beim Senken der Last ein Bremsmoment erforderlich ist. Die Lösung sieht deshalb vor, dass sich die Magnetpole zunächst in einer Ruhelage befinden. Erst bei Drehung der Bremsscheibe bewegen sie sich entlang eines vorgegebenen Weges, was mittels einer Zwangsführung erfolgt. Die Bewegung auf diesem Weg erfolgt jeweils gegen die Rückstellkraft eines elastischen Elements, wobei sich der radiale Abstand von der Drehachse entlang des Weges jeweils ändert. Beispielsweise kann der radiale Abstand proportional zur Drehzahl stetig zunehmen, wobei die Größe der Zunahme in beiden Drehrichtungen unterschiedlich groß ist. Beim Heben kann das Bremsmoment der Bremsscheibe auf diese Weise jeweils deutlich geringer eingestellt werden.

In einer einfachen Ausführung ist das elastische Element eine Schraubenfeder, die mittels ihrer Federkraft entsprechend der Federkennlinie den vorgegebenen radialen Abstand selbsttätig einstellt. Es ist also lediglich eine Schraubenfeder mit der gewünschten Federkennlinie auszuwählen.

Eine einfache Ausführung sieht vor, dass die beiden Magnetpole an einem U-förmigen Permanentmagneten ausgebildet sind.

Eine einfache Zwangsführung wird dadurch erzielt, dass die beiden Magnetpole am freien Ende eines die Bremsscheibe U-förmig umgreifenden Schwenkelements angeordnet sind, dessen Schwenkachse parallel zur Drehachse verläuft.

Zweckmäßigerweise ist der Schwenkwinkel des Schwenkelements durch einen Anschlag begrenzt, so dass beispielsweise beim Schwenken ab einer vorbestimmbaren Drehzahl das jeweils größtmögliche Bremsmoment wirksam ist, wobei sich die Magnetpole an einer Stelle mit relativ großem radialen Abstand zur Drehachse befinden.

Die Bremscharakteristik der Wirbelstrombremse lässt sich dadurch stark richtungsabhängig gestalten, dass ein quer zur Bremsscheibe ausgerichtetes, mittels zweier Magnetpole gebildetes weiteres Magnetfeld vorgesehen ist. Dieses zusätzliche Magnetfeld wird jeweils nur bei einer Drehrichtung, beim Hebezeug bei der dem Senken entsprechenden Drehrichtung, zugeschaltet. Eine einfache Ausführung sieht vor, dass das Schwenkelement zweiarmig ausgebildet ist und die Magnetpole der beiden Magnetfelder jeweils an den freien Enden der beiden Arme angeordnet sind. Weiter vereinfachend ist es, wenn das weitere Magnetfeld nur bei einer Drehrichtung auf die Bremsscheibe einwirkt und sich bei der anderen Drehrichtung außerhalb der Bremsscheibe befindet.

Die Lösung sieht bezüglich des Hebezeugs vor, dass der Elektromotor ein Gleich- und/oder Wechselstrommotor ohne generatorisches Moment und/oder mit einer stark lastabhängigen Drehzahl ist und die Bremse aus einem selbsthemmenden Getriebe, insbesondere ein Schneckengetriebe, und einer Wirbelstrombremse gebildet ist. Die Wirbelstrombremse unterstützt das im höheren Drehzahlbereich nicht mehr selbstbremsend wirkende Getriebe; bei Stillstand übt das statisch selbsthemmende Getriebe ausschließlich die Brems- bzw. Haltefunktion aus.

Ein Ausführungsbeispiel der Erfindung ist in der Zeichnung dargestellt und wird nachfolgend näher beschrieben. Es zeigen:
- Fig. 1 - 3: eine Wirbelstrombremse für ein Hebezeug mit zwei unterschiedlichen Drehrichtungen und bei unterschiedlichen Drehzahlen,
- Fig. 4: die Wirbelstrombremse gemäß Fig. 1 in einer Draufsicht und
- Fig. 5: ein Hebezeug mit einer Wirbelstrombremse gemäß Fig. 1 in einer Draufsicht.

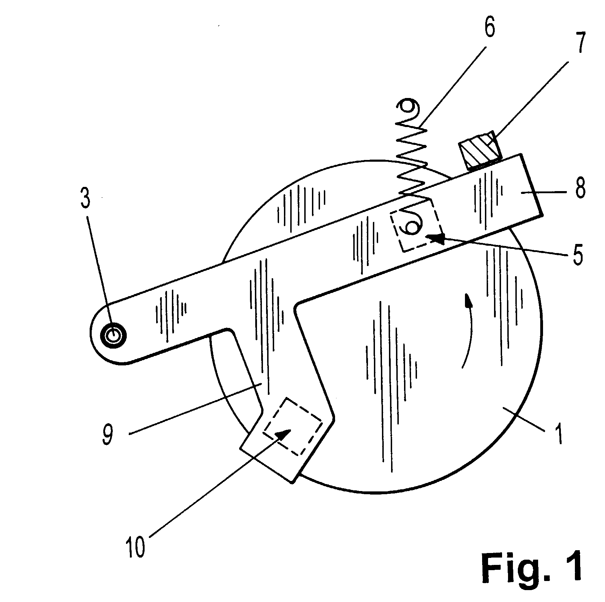

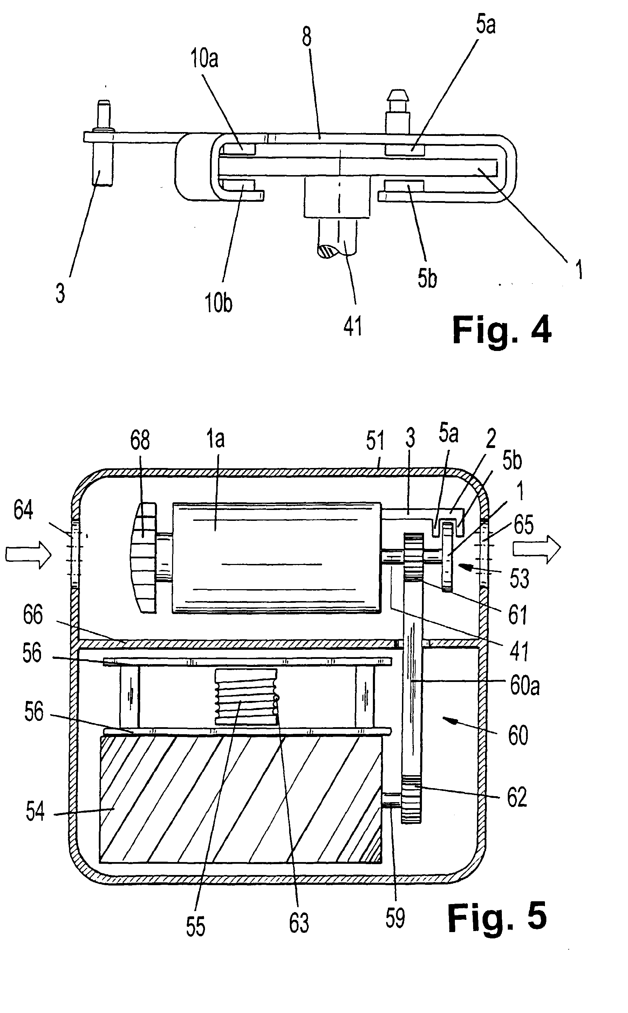

Fig. 1 zeigt eine Wirbelstrombremse mit einer flachen Kreisscheibe aus einem elektrisch leitenden Material, z.B. Aluminium, als Bremsscheibe 1. Die Bremsscheibe 1 wird von einem Elektromotor 1a (s. Fig. 5) angetrieben, der als Universalmotor ausgebildet ist. Weiter besteht die Wirbelstrombremse aus einem Schwenkelement 2, das um eine parallel zur Drehachse 4 der Bremsscheibe 1 verlaufende Schwenkachse 3 schwenkbar ist. Das Schwenkelement 2 umgreift die Bremsscheibe U-förmig (s. Fig. 4), wobei an den beiden Schenkeln des U's zwei einander beabstandete Magnetpole 5 unter Belassung eines Luftspalts angeordnet sind, und zwar derart, dass sich ein Nordmagnetpol 5a und ein Südmagnetpol 5b einander zugewandt gegenüberliegen. Die beiden Magnetpole 5 erzeugen ein quer zur Bremsscheibe 1 ausgerichtetes Magnetfeld, das die Bremsscheibe 1 lokal im Bereich der Magnetpole 5 durchdringt.

Bei drehender Bremsscheibe 1 wird in diesem Bereich in der Bremsscheibe 1 ein elektrischer Strom induziert, der radial gerichtet ist und sich über die nicht im Magnetfeld befindlichen Scheibenabschnitte schließt. Dieser Strom wiederum erzeugt ein Gegenmagnetfeld, welches seiner Ursache entgegenwirkt, d.h. die Drehbewegung der Bremsscheibe 1 hemmt. Die Stärke des Gegenmagnetfeldes hängt von der Drehzahl sowie dem radialen Abstand von der Drehachse der Bremsscheibe ab; die Richtung des Gegenmagnetfeldes wird von der Drehrichtung bestimmt. Das Gegenmagnetfeld verschwenkt dabei das Schwenkelement 2 mit den Magnetpolen 5 um die Schwenkachse 3.

Das Schwenkelement 2 bildet eine Zwangsführung, d.h. das Schwenkelement 2 gibt einen Kreisbogen um die Schwenkachse 3 als Weg vor, auf dem sich die Magnetpole 5 über die Scheibe hinweg bewegen können. Dabei ändert sich der radiale Abstand der beiden Magnetpole 5 von der Drehachse 4 stetig.

Weiter ist in Fig. 1 eine Schraubenfeder 6 als elastisches Element gezeigt, die einer Bewegung der Magnetpole 5 aus ihrer Ruhelage durch das induzierte Gegenmagnetfeld eine Rückstellkraft entgegensetzt. Die Ruhelage ist in den Figuren nicht dargestellt; sie ist die Stellung des Schwenkhebels 2, die dieser bei stillstehender Bremsscheibe 1 einnimmt.

Selbstverständlich kann die Schraubenfeder 6 auch aus zwei auf je einer Seite des Schwenkelements 2 angeordneter Schraubenfedern gebildet sein, wobei sich die effektive Kennlinie durch Überlagerung der beiden Einzelkennlinien dieser Schraubenfedern ergibt.

Fig. 1 zeigt weiter einen Anschlag 7, der den Schwenkwinkel des Schwenkelements 2 auf einer Schwenkseite derart begrenzt, dass der radiale Abstand der Magnetpole 5 von der Drehachse 4 den größtmöglichen Wert annimmt.

Das Schwenkelement 2 ist in Fig. 1 zweiarmig ausgebildet, mit einem langen Arm 8 und einem kurzen Arm 9, wobei der kurzen Arm 9 senkrecht zum langen Arm 8 verläuft. Dabei ist der radiale Abstand des Befestigungspunkts des Arms 9 am Arm 8 von der Schwenkachse 3 deutlich kürzer als der radiale Abstand der Magnetpole 5 von der Schwenkachse 3. Am freien Ende des kurzen Arms 9 ist ein weiteres Paar von Magnetpolen 10 (Nordmagnetpol 10a, Südmagnetpol 10b) analog den Magnetpolen 5 am Arm 8 angeordnet.

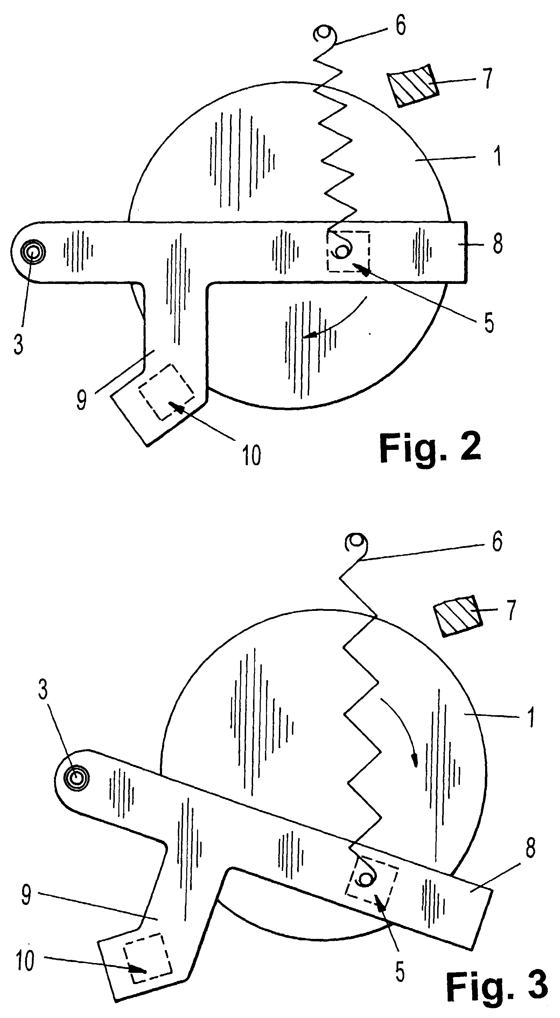

Das gesamte Magnetfeld der beiden Magnetpole 10 wirkt in Fig. 1 vollständig auf die Bremsscheibe 1 ein, während sich die Magnetpole 10 in Fig. 3 außerhalb der Bremsscheibe 1 befinden und folglich auch keine Bremswirkung ausüben. Mit dem zweiarmigen Schwenkelement 2 erhält man so auf einfache Weise eine verstärkte Bremswirkung bei einer Drehrichtung.

Die beiden Figuren Fig. 2 und 3 zeigen das Schwenkelement 2 in zwei weiteren Schwenkstellungen bei entgegengesetzter Drehrichtung und zwei unterschiedlichen Drehzahlen, wobei die Drehzahl in Fig. 2 kleiner als in Fig. 3 ist, mit entsprechend kleinerer Bremswirkung.

Fig. 4 zeigt eine Draufsicht auf die Wirbelstrombremse gemäß Fig. 1. Von dem Elektromotor 1a ist in Fig. 4 nur die Motorwelle 41 dargestellt.

Fig. 5 zeigt ein Hebezeug mit einem quaderförmigen Gehäuse 51 in einer schematischen Darstellung von oben gesehen. In dem Gehäuse 51 sind der Elektromotor 1a, eine Wirbelstrombremse 53, ein selbsthemmendes Schneckengetriebe 54 sowie als Zugmitteltrieb 55 ein Seiltrieb in einer gemeinsamen Ebene liegend angeordnet. Als Zugmitteltrieb 55 kann alternativ auch ein Kettentrieb und dgl. vorgesehen sein.

Wie Fig. 5 zeigt, verläuft die Motorwelle 41 parallel zur Drehachse 59 des Schneckengetriebes 54. Verbunden ist die Motorwelle 41 mit der Drehachse 59 über einen Riementrieb 60, dessen Riemen 60a über ein als Zahnrad ausgebildetes Antriebsrad 61 geführt ist, das abtriebsseitig auf der Motorwelle 41 sitzt, und ein angetriebenes Zahnrad 62, das auf der Drehachse 59 des Schneckengetriebes 54 befestigt ist. Der von dem Schneckengetriebe 54 direkt angetriebene Zugmitteltrieb 55 ist räumlich zwischen dem Elektromotor 1a in einem Tragrahmen 56 und dem Schneckengetriebe 54 angeordnet. Fig. 5 zeigt, dass die Drehachse des Zugmitteltriebs 55 senkrecht zur Drehachse des Schneckengetriebes 54 verläuft. Das Zugmittel 63 ist durch eine nicht gezeigte Gehäuseöffnung nach außen geführt.

Weiter sind in der Fig. 5 eine Eintrittsöffnung 64 und eine Austrittsöffnung 65 für Kühlluft (s. Pfeile in Fig. vorgesehen. Im Gehäuseinneren wird der kühlluftdurchströmte Gehäusebereich durch eine Zwischenwand 66 von dem benachbarten Bereich abgetrennt, in dem sich das Schneckengetriebe 54 und der Zugmitteltrieb 55 befinden. In der Zwischenwand 66 ist lediglich eine kleine Öffnung für den Durchtritt des Riemens 60a angeordnet. Das Lüfterrad 68, das auf dem der Abtriebsseite gegenüberliegenden Ende der Motorwelle 41 sitzt, saugt Kühlluft durch die Eintrittsöffnung 64 an und drückt diese in Richtung der Motorwellenerstreckung durch den gekühlten Gehäusebereich. Die Kühlluft kühlt folglich den Elektromotor 1a sowie die Bremsscheibe 1 während des Motorbetriebs. Die Bremsscheibe 1 ist vor der Austrittsöffnung 15 angeordnet, so dass die Kühlluft auch diese zwangsweise umströmt.

Die Wirbelstrombremse ist in Fig. 5 nur schematisch dargestellt, mit den Elementen Bremsscheibe 1, Schwenkachse 3, Nordmagnetpol 5a, Südmagnetpol 5b und Schwenkelement 2.

Das Schneckengetriebe 54 ist statisch selbsthemmend ausgeführt. Die Bremswirkung ist bei kleinen Drehzahlen am größten und nimmt mit zunehmender Drehzahl der Schnecke ab. Kombiniert man das statisch selbsthemmende Schneckengetriebe 54 mit der Wirbelstrombremse, so kann ein gewünschtes drehzahl- und drehrichtungsabhängiges Bremsmoment mit geringem technischem Aufwand in einem relativ großen Stellbereich, einschließlich der Drehzahl Null, festgelegt werden.

Der äußerst preiswerte Universalmotor ist hierbei als Elektromotor 1a besonders günstig. Er weist mindestens eine Statorwicklung und eine Rotorwicklung und kein generatorisches Moment auf, wobei die Wicklungen in Reihe geschaltet mit Gleich- oder Wechselstrom betrieben werden. Sein Drehzahlverhalten ist stark lastabhängig, eine Eigenschaft, die durch die Wirbelstrombremse auf ein akzeptables Maß reduziert wird. Das Hebezeug wird hierzu mittels der Wirbelstrombremse und des Schneckengetriebes 54 mit einem Grundlastmoment betrieben, wodurch der bei fehlender Belastung zum Überdrehen neigende Universalmotor stabil läuft.

Mit anderen Worten übernimmt bei einem Hebezeug die Wirbelstrombremse gemeinsam mit einem selbsthemmenden Getriebe, vorzugsweise einem Schneckengetriebe 54, die Bremsfunktion, wobei die Wirbelstrombremse das im höheren Drehzahlbereich schwächer bis nicht mehr bremsend wirkende Schneckengetriebe 54 unterstützt, während bei Stillstand das statisch selbsthemmende Schneckengetriebe 54 ausschließlich die Bremsfunktion ausübt.

Bezogen auf ein Hebezeug zeigen die Darstellungen in Fig. 1: Senken einer Last, Fig. 2: Heben mit Voll- bzw. Nennlast und Fig. 3: Heben ohne Last.

## Patentansprüche

1. Bremse, insbesondere für einen mit einem Universalmotor und einem selbsthemmenden Schneckengetriebe versehenen Antrieb eines Hebezeugs, mit einer drehangetriebenen elektrisch leitenden Bremsscheibe und einem quer zur Bremsscheibe ausgerichteten und zumindest zeitweise jeweils auf einen Teil der Bremsscheibe einwirkenden Magnetfeld, das eine die Bewegung der Bremsscheibe hemmende von deren Drehzahl sowie dem radialen Abstand von der Drehachse der Bremsscheibe abhängige Reaktionskraft erzeugt und dessen Richtung von der Drehrichtung der Bremsscheibe abhängt, wobei das Magnetfeld mittels zweier beidseitig der Bremsscheibe angeordneter Magnetpole, eines Nord- und eines Südmagnetpols, gebildet ist,
**dadurch gekennzeichnet,**
dass die beiden Magnetpole (5, 10) von der Reaktionskraft aus einer Ruhelage entlang eines von einer Zwangsführung vorgegebenen Weges gegen die Rückstellkraft eines elastischen Elements (6) jeweils in Drehrichtung der Bremsscheibe (1) bewegbar sind, wobei der radiale Abstand im Verlauf des Weges durch den gewünschten Verlauf der drehrichtungs- und drehzahlabhängigen Bremskraft vorgegeben und mittels der Rückstellkraft des elastischen Elements (6) einstellbar ist.

2. Bremse nach Anspruch 1,
**dadurch gekennzeichnet,**
dass das elastische Element (6) eine Feder ist, die mittels ihrer Federkraft entsprechend der Federkennlinie den vorgegebenen radialen Abstand selbsttätig einstellt.

3. Bremse nach einem der Ansprüche 1 oder 2,
**dadurch gekennzeichnet,**
dass die beiden Magnetpole (5) an den freien Enden eines u-förmigen Permanentmagneten ausgebildet sind.

4. Bremse nach einem der Ansprüche 1 - 3,
**dadurch gekennzeichnet,**
dass die beiden Magnetpole (5) an den freien Enden eines die Bremsscheibe (1) u-förmig umgreifenden Schwenkelements (2) angeordnet sind, dessen Schwenkachse (3) parallel zur Drehachse verläuft.

5. Bremse nach Anspruch 4,
**dadurch gekennzeichnet,**
dass der Schwenkwinkel des Schwenkelements durch einen Anschlag (7) begrenzt ist.

6. Bremse nach einem der Ansprüche 1 - 5,
**dadurch gekennzeichnet,**
dass ein quer zur Bremsscheibe (1) ausgerichtetes, mittels zweier Magnetpole (10) gebildetes weiteres Magnetfeld vorgesehen ist.

7. Bremse nach einem der Ansprüche 1 -6,
**dadurch gekennzeichnet,**
dass das Schwenkelement zweiarmig ausgebildet ist und die Magnetpole (5, 10) der beiden Magnetfelder jeweils an den freien Enden der beiden Arme (8, 9) angeordnet sind.

8. Bremse nach einem der Ansprüche 6 oder 7,
**dadurch gekennzeichnet,**
dass das weitere Magnetfeld (10) nur bei einer Drehrichtung auf die Bremsscheibe (1) einwirkt und sich bei der anderen Drehrichtung außerhalb der Bremsscheibe (1) befindet.

9. Hebezeug, insbesondere Kleinsthebezeug,
mit einem Hubantrieb, der einen Elektromotor, ein Getriebe und eine Bremse aufweist, **dadurch gekennzeichnet,**
dass der Elektromotor (1a) ein Gleich- oder Wechselstrommotor ohne generatorisches Moment und/oder mit einer stark lastabhängigen Drehzahl ist und die Bremse aus einem selbathemmenden Getriebe (54), insbesondere ein Schneckengetriebe, und einer Wirbelstrombremse (53), insbesondere nach einem der vorhergehenden Ansprüche 1 - 8, gebildet ist.

10. Hebezeug nach Anspruch 9,
**dadurch gekennzeichnet,**
dass der Elektromotor (1a) ein Universalmotor ist.
